# EUROPEAN PATENT SPECIFICATION

(11) **EP 4 030 751 B1**
(45) Date of publication and mention of the grant of the patent: **25.02.2026**
(21) Application number: 20946683.8
(22) Date of filing: 27.07.2020
(51) Int. Cl.: G11B 27/031, H04N 23/90, G01C 21/00, G07C 5/08, G08B 13/196, G11B 27/036, G11B 27/038, G11B 27/28, G06V 20/58, G06V 20/62, G08G 1/01, H04N 7/18, H04N 21/218, H04N 21/234, H04N 21/8547, G08G 1/017, G08G 1/056

(54) **METHOD, DEVICE, AND SYSTEM FOR VIDEO STITCHING**
VERFAHREN, VORRICHTUNG UND SYSTEM FÜR VIDEOZUSAMMENFÜHRUNG
PROCÉDÉ, DISPOSITIF ET SYSTÈME D'ASSEMBLAGE VIDÉO

(43) Date of publication of application: 20.07.2022
(73) Proprietor: Shenzhen Yinwang Intelligent Technologies Co., Ltd., Shenzhen City, Guangdong 518129 (CN)
(72) Inventor: ZHANG, Guicheng, Shenzhen, Guangdong 518129 (CN); ZHAO, Shuai, Shenzhen, Guangdong 518129 (CN); LI, Dafeng, Shenzhen, Guangdong 518129 (CN)
(74) Representative: Gill Jennings & Every LLP
(86) International application number: PCT/CN2020/104852
(87) International publication number: WO 2022/020996

(56) References cited:
- EP-A1- 3 314 609
- CN-A- 101 304 490
- CN-A- 109 788 212
- CN-A- 111 385 641
- CN-A- 112 544 071
- JP-B2- 4 321 357
- JP-B2- 5 804 007
- US-A1- 2010 149 331
- US-A1- 2010 157 064
- US-A1- 2015 155 009
- US-A1- 2017 178 688
- US-A1- 2017 262 706
- US-A1- 2018 189 600
- US-A1- 2019 156 495

## Description

### TECHNICAL FIELD

This application relates to the field of image processing technologies, and in particular, to a video stitching method, apparatus, and system.

### BACKGROUND

In image processing, video stitching is a relatively common image processing manner.

Usually, video stitching is performed on a plurality of videos in a time sequence. For example, a plurality of videos may be stitched into a complete video in a time sequence based on a shooting time sequence of the videos.

However, in a time sequence-based video stitching method, a time accuracy requirement is high, but a video obtaining time is usually not accurate enough, resulting in a poor video stitching effect. JP 5 804007 B2 discusses a moving image generation system capable of generating easy-to-see moving image data in which the states of moving objects (such as the position and size in the moving image) are aligned. US 2019/156495 A1 discusses a system and method of processing video information received from surveillance cameras for tracking moving objects in real time or archival video. US 2010/149331 A1 discusses a method, system and computer program product for time stamped imagery assembly for course performance video replay. US 2018/189600 A1 describes methods, systems, devices, and other techniques for video monitoring, and more particularly, for example, to techniques for tracking objects across video scenes captured by cameras having different fields of view. US 2010/157064 A1 discusses that if an active smart node which detects that an object leaves a center region of a FOY for a boundary region, the active smart node predicts a possible path of the object.

### SUMMARY

This application provides a video stitching method, apparatus, and system, to improve video stitching accuracy, so as to achieve a good video stitching effect.

It should be understood that the video stitching method provided in the embodiments of this application may be performed by a video stitching system.

In a possible implementation, the video stitching system includes a video segment obtaining unit and a stitching unit.

The video segment obtaining unit is configured to obtain a plurality of video segments related to a target vehicle.

The stitching unit is configured to stitch a first video segment and a second video segment based on a stitching video frame, where the first video segment and the second video segment are two video segments that are adjacent in time in the plurality of video segments, the stitching video frame is a video frame that is used for video stitching and that is determined in a second boundary video based on positioning information of the target vehicle in a first boundary video, the first boundary video is a multi-frame video at an end location of the first video segment, and the second boundary video is a multi-frame video at a start location of the second video segment.

It should be noted that the video stitching system in the embodiments of this application may be a separate apparatus with a video stitching function, or may be a combination of at least two apparatuses. In other words, the at least two apparatuses are combined into a complete system that has a video stitching function. When the video stitching system is a combination of at least two apparatuses, two apparatuses in the video stitching system may communicate with each other through one of Bluetooth, a wired connection, or wireless transmission.

The video stitching system in the embodiments of this application may be installed on a mobile device, for example, in a vehicle, and is used by the vehicle to stitch videos of the vehicle, to obtain a video with a good stitching effect. In addition, the video stitching system may alternatively be installed on a fixed device other than the mobile device. For example, the video stitching system is installed on a device such as a road side unit (road side unit, RSU) or a server, and is configured to perform video stitching on videos related to a target vehicle, to obtain a video with a good stitching effect.

According to a first aspect, an embodiment of this application provides a video stitching method is provided according to appended claim 1.

According to a comparative example, an embodiment of this application provides a video stitching method, including: receiving a plurality of video segments related to a target vehicle; obtaining a first video segment and a second video segment that are adjacent in time in the plurality of video segments; and stitching the first video segment and the second video segment based on a stitching video frame, where the stitching video frame is a video frame that is used for video stitching and that is determined in a second boundary video based on positioning information of the target vehicle in a first boundary video, the first boundary video is a multi-frame video at an end location of the first video segment, and the second boundary video is a multi-frame video at a start location of the second video segment.

Based on the video stitching methods in the first aspect or the comparative example, there may be the following possible implementations.

In a possible implementation, the video segment includes shooting time of a video frame in the video segment and positioning information of the target vehicle in the video frame; and the stitching video frame is specifically a video frame that is selected from the second boundary video and that is closest to first location information, where the first location information is predicted based on positioning information of the target vehicle in a plurality of video frames in the first boundary video. In this way, the video frame closest to a predicted location of the target vehicle can be selected from the second boundary video as the stitching video frame. A location of the target vehicle generally does not change suddenly. Therefore, in this embodiment of this application, a relatively accurate stitching video frame can be obtained by selecting the video frame closest to the predicted location of the target vehicle as the stitching video frame, so that a good stitching effect can be achieved.

In a possible implementation, predicting the first location information based on the positioning information of the target vehicle in the plurality of video frames in the first boundary video includes: determining at least three video frames in the first boundary video, where the at least three video frames include the last video frame of the first boundary video; and calculating speed information and direction information of the target vehicle based on shooting time of the at least three video frames and positioning information of the target vehicle in the at least three video frames, where the speed information and the direction information are used to predict the first location information. In this way, the first location information of a relatively accurate target location can be obtained through prediction based on a speed and a direction of the target vehicle, so that an accurate stitching video frame can be subsequently selected from the second boundary video.

In a possible implementation, the first location information is obtained by adding a first value to positioning information of the target vehicle in the last video frame of the first boundary video in a direction indicated by the direction information, and the first value is negatively correlated with the speed information. A higher speed of the target vehicle indicates a larger location change within a period of time. When a location of the target vehicle is predicted, if the first value is relatively large, prediction inaccuracy tends to occur. Therefore, the first location information of a relatively accurate target location can be obtained by setting the first value to be negatively correlated with the speed information, so that an accurate stitching video frame can be subsequently selected from the second boundary video.

In a possible implementation, the positioning information of the target vehicle includes location information determined with assistance of a traveling speed of the target vehicle and an included angle of a steering wheel of the target vehicle. In this way, relatively accurate location information of the target vehicle can be determined with assistance of the included angle of the steering wheel.

In a possible implementation, the positioning information of the target vehicle includes location information obtained by performing deviation compensation based on a shooting angle of view of the video frame. In this way, relatively accurate location information can be obtained by performing deviation compensation based on the shooting angle of view of the video frame.

The obtaining a plurality of video segments related to a target vehicle includes: receiving a video composition request, where the video composition request includes an identifier, trajectory information, and time information of the target vehicle; obtaining source videos that are related to the trajectory information and the time information and that include the target vehicle; and determining the plurality of video segments related to the target vehicle in the source videos. In this way, a related video of the target vehicle can be composed based on a request of a user, so that a requirement of the user is better satisfied.

In a possible implementation, the obtaining source videos that are related to the trajectory information and the time information and that include the target vehicle includes: obtaining the source videos whose location differences from the trajectory information are within a first threshold range, whose time differences from the time information are within a second threshold range, and that include the target vehicle. In this way, relatively valid source video data for the target vehicle can be obtained, so as to avoid waste of a subsequent computing resource that is caused by a useless video in the source video data.

In a possible implementation, the first threshold range is negatively correlated with a speed of the target vehicle, and/or the second threshold range is negatively correlated with the speed of the target vehicle.

In a possible implementation, the source videos include a video shot by another vehicle and/or a video shot by a road device. In this way, videos of the target vehicle at a plurality of angles can be obtained, so that relatively abundant stitching materials can be obtained.

The determining the plurality of video segments related to the target vehicle in the source videos includes: performing filtering on the source videos, to obtain a plurality of first video segments including the target vehicle; when there are video segments whose shooting time overlapping ratios are greater than a third threshold in the plurality of first video segments, performing quality rating on the video segments whose shooting time overlapping ratios are greater than the third threshold; and selecting, based on the quality rating, one video segment from the video segments whose shooting time overlapping ratios are greater than the third threshold. In this way, a video segment with relatively good quality can be used as a video segment for stitching, to obtain a stitched video with relatively good quality.

The performing quality rating on the video segments whose shooting time overlapping is greater than the third threshold includes: performing, based on proportions and center degrees of the target vehicle in the video segments whose shooting time overlapping is greater than the third threshold, quality rating on the video segments whose shooting time overlapping is greater than the third threshold, where the proportion of the target vehicle is a ratio of a size of the target vehicle to a size of a video frame.

In a possible implementation, the plurality of video segments are video segments sorted based on shooting time of the plurality of video segments; and when a shooting time interval between adjacent video segments in the plurality of video segments is greater than a fourth threshold, a preset video is inserted between the adjacent video segments. In this way, when two video segments with a relatively large time interval are stitched, the preset video may be inserted, to avoid an excessively large location jump during scene switching after stitching, and improve smoothness of a stitched video.

It should be noted that the method in this embodiment of this application may be performed locally, or may be performed on a cloud. This is not specifically limited in this embodiment of this application.

According to a second aspect, an embodiment of this application further provides a video stitching apparatus, and the apparatus may be configured to perform an operation in the first aspect, the comparative example, or any one of the foregoing possible implementations. For example, the apparatus may include modules or units configured to perform operations in the first aspect, the comparative example, or any one of the foregoing possible implementations. For example, the apparatus includes a transceiver module and a processing module.

For example, the transceiver module is configured to obtain a plurality of video segments related to a target vehicle; and the processing module is configured to stitch a first video segment and a second video segment based on a stitching video frame, where the first video segment and the second video segment are two video segments that are adjacent in time in the plurality of video segments, the stitching video frame is a video frame that is used for video stitching and that is determined in a second boundary video based on positioning information of the target vehicle in a first boundary video, the first boundary video is a multi-frame video at an end location of the first video segment, and the second boundary video is a multi-frame video at a start location of the second video segment. In this embodiment of this application, when a plurality of video segments are stitched, high-precision stitching may be performed on boundary videos in the video segments based on location information of a target vehicle in a video object, to improve video stitching accuracy, so that a good video stitching effect can be achieved.

For example, the transceiver module is configured to obtain a plurality of video segments related to a target vehicle; and the processing module is configured to: obtain a first video segment and a second video segment that are adjacent in time in the plurality of video segments; and stitch the first video segment and the second video segment based on a stitching video frame, where the stitching video frame is a video frame that is used for video stitching and that is determined in a second boundary video based on positioning information of the target vehicle in a first boundary video, the first boundary video is a multi-frame video at an end location of the first video segment, and the second boundary video is a multi-frame video at a start location of the second video segment.

In a possible implementation, the video segment includes shooting time of a video frame in the video segment and positioning information of the target vehicle in the video frame; and the stitching video frame is specifically a video frame that is selected from the second boundary video and that is closest to first location information, where the first location information is predicted based on positioning information of the target vehicle in a plurality of video frames in the first boundary video. In this way, the video frame closest to a predicted location of the target vehicle can be selected from the second boundary video as the stitching video frame. A location of the target vehicle generally does not change suddenly. Therefore, in this embodiment of this application, a relatively accurate stitching video frame can be obtained by selecting the video frame closest to the predicted location of the target vehicle as the stitching video frame, so that a good stitching effect can be achieved.

In a possible implementation, the processing module is specifically configured to: determine at least three video frames in the first boundary video, where the at least three video frames include the last video frame of the first boundary video; and calculate speed information and direction information of the target vehicle based on shooting time of the at least three video frames and positioning information of the target vehicle in the at least three video frames, where the speed information and the direction information are used to predict the first location information. In this way, the first location information of a relatively accurate target location can be obtained through prediction based on a speed and a direction of the target vehicle, so that an accurate stitching video frame can be subsequently selected from the second boundary video.

In a possible implementation, the first location information is obtained by adding a first value to positioning information of the target vehicle in the last video frame of the first boundary video in a direction indicated by the direction information, and the first value is negatively correlated with the speed information. A higher speed of the target vehicle indicates a larger location change within a period of time. When a location of the target vehicle is predicted, if the first value is relatively large, prediction inaccuracy tends to occur. Therefore, the first location information of a relatively accurate target location can be obtained by setting the first value to be negatively correlated with the speed information, so that an accurate stitching video frame can be subsequently selected from the second boundary video.

In a possible implementation, the positioning information of the target vehicle includes location information determined with assistance of a traveling speed of the target vehicle and an included angle of a steering wheel of the target vehicle. In this way, relatively accurate location information of the target vehicle can be determined with assistance of the included angle of the steering wheel.

In a possible implementation, the positioning information of the target vehicle includes location information obtained by performing deviation compensation based on a shooting angle of view of the video frame. In this way, relatively accurate location information can be obtained by performing deviation compensation based on the shooting angle of view of the video frame.

In a possible implementation, the transceiver module is specifically configured to: receive a video composition request, where the video composition request includes an identifier, trajectory information, and time information of the target vehicle; obtain source videos that are related to the trajectory information and the time information and that include the target vehicle; and determine the plurality of video segments related to the target vehicle in the source videos. In this way, a related video of the target vehicle can be composed based on a request of a user, so that a requirement of the user is better satisfied.

In a possible implementation, the transceiver module is specifically configured to obtain the source videos whose location differences from the trajectory information are within a first threshold range, whose time differences from the time information are within a second threshold range, and that include the target vehicle. In this way, relatively valid source video data for the target vehicle can be obtained, so as to avoid waste of a subsequent computing resource that is caused by a useless video in the source video data.

In a possible implementation, the first threshold range is negatively correlated with a speed of the target vehicle, and/or the second threshold range is negatively correlated with the speed of the target vehicle.

In a possible implementation, the source videos include a video shot by another vehicle and/or a video shot by a road device. In this way, videos of the target vehicle at a plurality of angles can be obtained, so that relatively abundant stitching materials can be obtained.

In a possible implementation, the processing module is further configured to: perform filtering on the source videos, to obtain a plurality of first video segments including the target vehicle; when there are video segments whose shooting time overlapping ratios are greater than a third threshold in the plurality of first video segments, perform quality rating on the video segments whose shooting time overlapping ratios are greater than the third threshold; and select, based on the quality rating, one video segment from the video segments whose shooting time overlapping ratios are greater than the third threshold. In this way, a video segment with relatively good quality can be used as a video segment for stitching, to obtain a stitched video with relatively good quality.

In a possible implementation, the processing module is specifically configured to perform, based on proportions and center degrees of the target vehicle in the video segments whose shooting time overlapping is greater than the third threshold, quality rating on the video segments whose shooting time overlapping is greater than the third threshold, where the proportion of the target vehicle is a ratio of a size of the target vehicle to a size of a video frame.

In a possible implementation, the plurality of video segments are video segments sorted based on shooting time of the plurality of video segments; and when a shooting time interval between adjacent video segments in the plurality of video segments is greater than a fourth threshold, a preset video is inserted between the adjacent video segments. In this way, when two video segments with a relatively large time interval are stitched, the preset video may be inserted, to avoid an excessively large location jump during scene switching after stitching, and improve smoothness of a stitched video.

According to a comparative example, an embodiment of this application provides a chip system, including a processor, and optionally, further including a memory. The memory is configured to store a computer program, and the processor is configured to invoke the computer program from the memory and run the computer program, so that a video stitching apparatus installed with the chip system performs any method in an aspect, the comparative example, or any possible implementation of the first aspect.

According to a comparative example, an embodiment of this application provides a vehicle, including at least one camera, at least one memory, at least one transceiver, and at least one processor.

The camera is configured to obtain a video segment. The memory is configured to store one or more programs and data information, where the one or more programs include instructions. The transceiver is configured to perform data transmission with a communications device in the vehicle, and is configured to perform data transmission with a cloud, to obtain a plurality of video segments related to a target vehicle. The processor is configured to stitch a first video segment and a second video segment based on a stitching video frame, where the first video segment and the second video segment are two video segments that are adjacent in time in the plurality of video segments, the stitching video frame is a video frame that is used for video stitching and that is determined in a second boundary video based on positioning information of the target vehicle in a first boundary video, the first boundary video is a multi-frame video at an end location of the first video segment, and the second boundary video is a multi-frame video at a start location of the second video segment.

In a possible implementation, the vehicle further includes a display and a voice broadcasting apparatus. The display is configured to display a stitched video. The voice broadcasting apparatus is configured to broadcast audio of the stitched video.

The transceiver and the processor in this embodiment of this application may further perform steps corresponding to the transceiver module and the processing module in any one of the possible implementations of the second aspect. For details, refer to the descriptions of the second aspect. Details are not described herein again.

The camera in this embodiment of this application may be a camera of a driver monitoring system, a cockpit camera, an infrared camera, an event data recorder (that is, a video recording terminal), a rear view camera, or the like. This is not specifically limited in this embodiment of this application.

A shooting area of the camera may be an external environment or an internal environment of the vehicle. For example, when the vehicle moves forward, the shooting area is an area in front of a vehicle head. When the vehicle moves backward, the shooting area is an area behind a vehicle tail. When the camera is a 360-degree multi-angle camera, the shooting area may be a 360-degree area around the vehicle, or the like. When the camera is disposed inside the vehicle, the shooting area may be an area inside the vehicle, or the like.

According to a comparative example, an embodiment of this application provides a computer program product. The computer program product includes computer program code. When the computer program code is run by a communications module and a processing module or a transceiver and a processor of a video stitching apparatus, the video stitching apparatus is enabled to perform any method in the first aspect, the comparative example, or any possible implementation of the first aspect.

According to a third aspect, an embodiment of this application provides a computer-readable storage medium. The computer-readable storage medium stores a program, and the program enables a video stitching apparatus to perform any method in the first aspect, the comparative example, or any possible implementation of the first aspect.

It should be understood that, the comparative examples and the second and third aspects of the embodiments of this application correspond to the technical solutions of the first aspect of the embodiments of this application, and beneficial effects achieved in the aspects and corresponding feasible implementations are similar. Details are not described again.

### BRIEF DESCRIPTION OF DRAWINGS

FIG. 1 is a schematic diagram of an application scenario according to an embodiment of this application;
FIG. 2 is a function block diagram of a vehicle 100 according to an embodiment of this application;
FIG. 3 is a schematic diagram of data preparation according to an embodiment of this application;
FIG. 4 is a schematic diagram of video obtaining according to an embodiment of this application;
FIG. 5 is a schematic diagram of video segment selection according to an embodiment of this application;
FIG. 6 is a schematic diagram of video rating according to an embodiment of this application;
FIG. 7 is a schematic diagram of low-precision stitching according to an embodiment of this application;
FIG. 8 is a schematic diagram of stitching video frame determining according to an embodiment of this application;
FIG. 9 is a schematic diagram of a video trajectory of a vehicle according to an embodiment of this application;
FIG. 10 is a schematic flowchart of a video stitching method according to an embodiment of this application;
FIG. 11 is a schematic diagram of a structure of a video stitching apparatus according to an embodiment of this application;
FIG. 12 is a schematic diagram of a structure of another video stitching apparatus according to an embodiment of this application; and
FIG. 13 is a schematic diagram of a structure of another vehicle according to an embodiment of this application.

### DESCRIPTION OF EMBODIMENTS

To clearly describe the technical solutions in the embodiments of this application, words such as "first" and "second" are used in the embodiments of this application to distinguish between same items or similar items that have basically same functions and purposes. For example, a first video segment and a second video segment are merely used to distinguish between different video segments, but a sequence of the video segments is not limited. A person skilled in the art may understand that the words such as "first" and "second" do not limit a quantity or an execution sequence, and the words such as "first" and "second" do not indicate a definite difference.

It should be noted that, in this application, terms such as "example" or "for example" are used to represent giving an example, an illustration, or descriptions. Any embodiment or design scheme described as an "example" or "for example" in this application should not be explained as being more preferred or having more advantages than another embodiment or design scheme. Specifically, use of "example" and "for example" is intended to present a relative concept in a specific manner.

In this application, "at least one" refers to one or more, and "a plurality of" refers to two or more. "And/or" describes an association between associated objects, and indicates that three relationships may exist. For example, A and/or B may indicate the following cases: A exists alone, both A and B exist, and B exists alone, where A and B may be singular or plural. The character "/" usually represents an "or" relationship between the associated objects. "At least one of the following items (pieces)" or a similar expression thereof means any combination of these items, including any combination of singular items (pieces) or plural items (pieces). For example, at least one (piece) of a, b, or c may represent: a, b, c; a and b; a and c; b and c; or a, b, and c; where a, b, and c may be singular or plural.

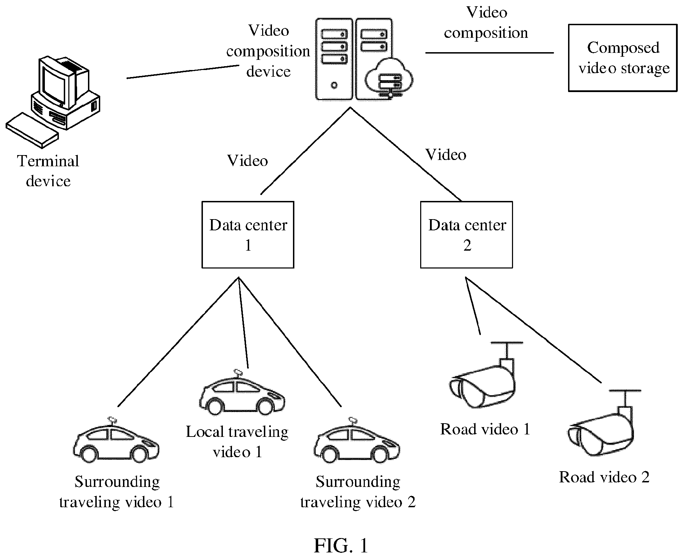

A video stitching method, apparatus, and system in the embodiments of this application may be applied to a scenario such as stitching of a plurality of source videos of a vehicle. For example, the video stitching method, apparatus, and system provided in the embodiments of this application can be applied to a scenario shown in FIG. 1.

As shown in FIG. 1, a video composition method in an embodiment of this application may be applied to a video composition device, and the video composition device may be a cloud server, a vehicle-mounted device, a vehicle, or the like.

In a possible application scenario, in a process of traveling on a road, a vehicle may capture a traveling video of the vehicle, and report the traveling video of the vehicle to a data center (for example, a cloud server communicating with the vehicle, a data processing apparatus inside the vehicle, or a device configured to store video data). The data center may further receive a video shot by another vehicle around the vehicle (for example, two surrounding vehicles in FIG. 1) and a video shot by a video capturing device on the road (for example, a camera installed on the road).

For example, a user may send a video composition request related to a target vehicle to the video composition device by using a terminal device. The video composition device may obtain, from the data center, a plurality of source videos (which may be understood as videos from different photographing devices) related to the target vehicle. The video composition device may stitch the plurality of source videos according to the video stitching method in the embodiments of this application, to obtain a traveling video of the target vehicle.

For example, a user may send a video composition request related to a target vehicle to the video composition device by using a vehicle-mounted device of the vehicle. The video composition device may obtain, from the data center, a plurality of source videos related to the target vehicle. The video composition device may stitch the plurality of source videos according to the video stitching method in the embodiments of this application, to obtain a traveling video of the target vehicle.

In a possible implementation, the stitched traveling video of the target vehicle may be stored in a storage device, or sent to the terminal device or the vehicle-mounted device that requests the traveling video of the target vehicle. Alternatively, the traveling video of the target vehicle is displayed in a display interface.

In a possible implementation, there may be one or more data centers, or there may be no data center. After capturing video data, a video capturing device in the vehicle or on the road may send the video data to the video composition device in real time or randomly or periodically.

Certainly, the video stitching method, apparatus, and system provided in the embodiments of this application may further be applied to another scenario. This is not limited in the embodiments of this application.

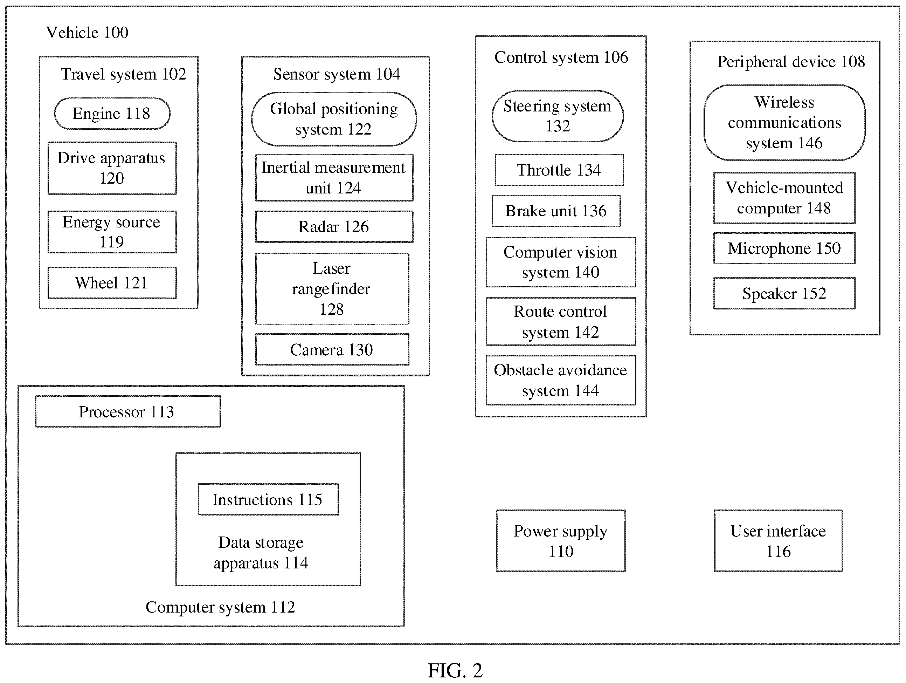

FIG. 2 is a function block diagram of a vehicle 100 according to an embodiment of this application. In an embodiment, the vehicle 100 is configured to a fully or partially autonomous driving mode, or configured as a vehicle that has a photographing capability and a communication capability. For example, when the vehicle 100 is configured to be in the partially autonomous driving mode, the vehicle 100 may further determine a current situation of the vehicle and an ambient environment of the vehicle through manual operations, determine a possible behavior of at least one vehicle in the ambient environment, determine a confidence level corresponding to a possibility that the vehicle is going to execute the possible behavior, and control the vehicle 100 based on the determined information. When the vehicle 100 is in the autonomous driving mode, the vehicle 100 may be set to operate without interaction with a person.

The vehicle 100 may include various subsystems, for example, a travel system 102, a sensor system 104, a control system 106, one or more peripheral devices 108, a power supply 110, a computer system 112, and a user interface 116. Optionally, the vehicle 100 may include more or fewer subsystems, and each subsystem may include a plurality of elements. In addition, all the subsystems and elements of the vehicle 100 may be wiredly or wirelessly interconnected to each other.

The travel system 102 may include a component that provides power for the vehicle 100 to move. In an embodiment, the travel system 102 may include an engine 118, an energy source 119, a drive apparatus 120, and a wheel/tire 121. The engine 118 may be an internal combustion engine, an electric motor, an air compression engine, or a combination of other types of engines, for example, a hybrid engine including a gasoline engine and an electric motor, or a hybrid engine including an internal combustion engine and an air compression engine. The engine 118 converts the energy source 119 into mechanical energy.

Examples of the energy source 119 include gasoline, diesel, other oil-based fuel, propane, other compressed gas-based fuel, anhydrous alcohol, solar panels, batteries, and other power sources. The energy source 119 may also provide energy for another system of the vehicle 100.

The drive apparatus 120 may transmit mechanical power from the engine 118 to the wheels 121. The drive apparatus 120 may include a gearbox, a differential, and a drive shaft. In an embodiment, the drive apparatus 120 may further include another component, for example, a clutch. The drive shaft may include one or more shafts that may be coupled to one or more wheels 121.

The sensor system 104 may include several sensors that sense information about the ambient environment of the vehicle 100. For example, the sensor system 104 may include a positioning system 122 (where the positioning system may be a GPS system, a BeiDou system, or another positioning system), an inertial measurement unit (inertial measurement unit, IMU) 124, a radar 126, a laser rangefinder 128, and a camera 130. The sensor system 104 may further include sensors (for example, a vehicle-mounted air quality monitor, a fuel gauge, and an oil temperature gauge) in an internal system of the monitored vehicle 100. Sensor data from one or more of these sensors can be used to detect an object and corresponding features (a location, a shape, a direction, a speed, and the like) of the object. Such detection and recognition are key functions of a safety operation of the automated vehicle 100.

The positioning system 122 may be configured to estimate a geographical location of the vehicle 100. The IMU 124 is configured to sense location and orientation changes of the vehicle 100 based on inertial acceleration. In an embodiment, the IMU 124 may be a combination of an accelerometer and a gyroscope.

The radar 126 may sense an object in the ambient environment of the vehicle 100 by using a radio signal. In some embodiments, in addition to sensing the object, the radar 126 may further be configured to sense a speed and/or a moving direction of the object.

The laser rangefinder 128 may sense, by using a laser, an object in an environment in which the vehicle 100 is located. In some embodiments, the laser rangefinder 128 may include one or more laser sources, a laser scanner, one or more detectors, and another system component.

The camera 130 may be configured to capture a plurality of images of the ambient environment of the vehicle 100. The camera 130 may be a static camera or a video camera.

The control system 106 controls operations of the vehicle 100 and the components of the vehicle 100. The control system 106 may include various elements, including a steering system 132, a throttle 134, a brake unit 136, a sensor fusion algorithm 138, a computer vision system 140, a route control system 142, and an obstacle avoidance system 144.

The steering system 132 may operate to adjust a moving direction of the vehicle 100. For example, in an embodiment, the steering system may be a steering wheel system.

The throttle 134 is configured to control an operating speed of the engine 118 and further control a speed of the vehicle 100.

The brake unit 136 is configured to control the vehicle 100 to decelerate. The brake unit 136 may use friction to slow down the wheels 121. In another embodiment, the brake unit 136 may convert kinetic energy of the wheels 121 into a current. The brake unit 136 may alternatively reduce a rotation speed of the wheels 121 by using other methods, to control the speed of the vehicle 100.

The computer vision system 140 may operate to process and analyze images captured by the camera 130, to recognize objects and/or features in the ambient environment of the vehicle 100. The objects and/or features may include traffic signals, road boundaries, and obstacles. The computer vision system 140 may use an object recognition algorithm, a structure from motion (structure from motion, SFM) algorithm, video tracking, and other computer vision technologies. In some embodiments, the computer vision system 140 may be configured to: draw a map for an environment, track an object, estimate an object speed, and the like.

The route control system 142 is configured to determine a travel route of the vehicle 100. In some embodiments, the route control system 142 may combine data from the sensor 138, a global positioning system (global positioning system, GPS) 122, and one or more predetermined maps to determine the travel route of the vehicle 100.

The obstacle avoidance system 144 is configured to identify, evaluate, and avoid or otherwise bypass a potential obstacle in the environment of the vehicle 100.

Certainly, for example, the control system 106 may add or alternatively include components other than those shown and described, or some of the components shown above may be reduced.

The vehicle 100 interacts with an external sensor, another vehicle, another computer system, or a user by using the peripheral device 108. The peripheral device 108 may include a wireless communications system 146, a vehicle-mounted computer 148, a microphone 150, and/or a speaker 152.

In some embodiments, the peripheral device 108 provides a means for a user of the vehicle 100 to interact with the user interface 116. For example, the vehicle-mounted computer 148 may provide information for the user of the vehicle 100. The user interface 116 may further operate the vehicle-mounted computer 148 to receive a user input. The vehicle-mounted computer 148 may perform operations through a touchscreen. In another case, the peripheral device 108 may provide a means for the vehicle 100 to communicate with another device located in the vehicle. For example, the microphone 150 may receive audio (for example, a voice command or other audio input) from the user of the vehicle 100. Similarly, the speaker 152 may output audio to the user of the vehicle 100.

The wireless communications system 146 may wirelessly communicate with one or more devices directly or through a communications network. For example, the wireless communications system 146 may perform 3G cellular communication such as code division multiple access (code division multiple access, CDMA), EVD0, global system for mobile communications (global system for mobile communications, GSM)/general packet radio service (general packet radio service, GPRS), or 4G cellular communication such as LTE, or perform communication through a 5G cellular network. The wireless communications system 146 may communicate with a wireless local area network (wireless local area network, WLAN) using wireless fidelity (wireless fidelity, Wi-Fi). In some embodiments, the wireless communications system 146 may directly communicate with a device through an infrared link, Bluetooth, or a ZigBee protocol (ZigBee). Other wireless protocols, for example, various vehicle communications systems, such as the wireless communications system 146, may include one or more dedicated short-range communications (dedicated short-range communications, DSRC) devices, and these devices may include public and/or private data communication between the vehicle and/or roadside stations.

The power supply 110 may supply power to various components of the vehicle 100. In an embodiment, the power supply 110 may be a rechargeable lithium-ion or lead-acid battery. One or more battery packs of such batteries may be configured as the power supply to supply power to the components of the vehicle 100. In some embodiments, the power supply 110 and the energy source 119 may be implemented together, for example, in some pure electric vehicles.

Some or all functions of the vehicle 100 are controlled by the computer system 112. The computer system 112 may include at least one processor 113. The processor 113 executes instructions 115 stored in a non-transitory computer-readable medium such as a data storage apparatus 114. The computer system 112 may alternatively be a plurality of computing devices that control an individual component or a subsystem of the vehicle 100 in a distributed manner.

The processor 113 may be any conventional processor, such as a commercially available central processing unit (central processing unit, CPU). Alternatively, the processor may be an application-specific integrated circuit (application-specific integrated circuit, ASIC) for specialized applications or other dedicated devices such as a hardware-based processor. Although FIG. 2 functionally illustrates other elements of the processor, the memory, and the computer system 112 in a same block, a person of ordinary skill in the art should understand that the processor, the computer, or the memory may actually include a plurality of processors, computers, or memories that may or may not be stored in a same physical housing. For example, the memory may be a hard disk drive or another storage medium located in a housing different from that of the computer. Therefore, it is understood that a reference to the processor or the computer includes a reference to a set of processors or computers or memories that may or may not operate in parallel. Different from using a single processor to perform the steps described herein, some components such as a steering component and a deceleration component may include respective processors. The processor performs only computation related to a component-specific function.

In various aspects described herein, the processor may be located far away from the vehicle and wirelessly communicate with the vehicle. In another aspect, some of the processes described herein are performed on the processor disposed inside the vehicle, while others are performed by a remote processor. The processes include necessary steps for performing a single operation.

In some embodiments, the data storage apparatus 114 may include the instructions 115 (for example, program logic), and the instructions 115 may be executed by the processor 113 to perform various functions of the vehicle 100, including the functions described above. The data storage apparatus 114 may also include additional instructions, for example, instructions for sending data to, receiving data from, interacting with, and/or controlling one or more of the travel system 102, the sensor system 104, the control system 106, and the peripheral device 108.

In addition to the instructions 115, the data storage apparatus 114 may further store data, such as a road map, route information, a location, a direction, a speed, and other vehicle data of the vehicle, and other information. Such information may be used by the vehicle 100 and the computer system 112 when the vehicle 100 operates in an autonomous mode, a semi-autonomous mode, and/or a manual mode.

The user interface 116 is configured to provide information for or receive information from the user of the vehicle 100. Optionally, the user interface 116 may include one or more input/output devices in a set of peripheral devices 108, for example, the wireless communications system 146, the vehicle-mounted computer 148, the microphone 150, and the speaker 152.

The computer system 112 may control the functions of the vehicle 100 based on inputs received from various subsystems (for example, the travel system 102, the sensor system 104, and the control system 106) and from the user interface 116. For example, the computer system 112 may use an input from the control system 106 to control the steering system 132 to avoid an obstacle detected by the sensor system 104 and the obstacle avoidance system 144. In some embodiments, the computer system 112 may be operated to provide control over many aspects of the vehicle 100 and the subsystems of the vehicle 100.

Optionally, one or more of the foregoing components may be installed separately from or associated with the vehicle 100. For example, the data storage apparatus 114 may exist partially or completely separate from the vehicle 100. The foregoing components may be communicatively coupled together in a wired and/or wireless manner.

Optionally, the foregoing components are merely examples. In actual application, components in the foregoing modules may be added or deleted based on an actual requirement. FIG. 2 should not be understood as any limitation on the embodiments of this application.

Usually, a traveling video of a vehicle is obtained from an event data recorder in the vehicle. A video file shot by the event data recorder may be stored in the vehicle locally or uploaded to cloud space. The video file may be used to record an important traveling event, for example, play back an accident, view an event, or view scenery on a road. However, the event data recorder is a traveling video recording device of the vehicle, and obtains a vehicle video in a personal use scenario.

Even if a current road device, vehicle, terminal, or the like may shoot a video that includes a target vehicle, for a plurality of videos from a plurality of sources, a common video stitching method is direct stitching based on a time sequence. This stitching method requires high time accuracy. If time accuracy is low, after a plurality of times of stitching, a video time disorder occurs. For a vehicle that travels fast, a deviation caused by time inaccuracy increases rapidly.

Based on this, in a video stitching method provided in the embodiments of this application, when a plurality of video segments are stitched, high-precision stitching may be performed on boundary videos in the video segments based on location information of a target vehicle in a video object after rough sorting is performed based on time, to improve video stitching accuracy, so that a good video stitching effect can be achieved.

In a possible understanding, in the method in the embodiments of this application, a playback video similar to that in an "event data recorder" may be provided for the target vehicle based on videos shot by the target vehicle and a device around the target vehicle. In addition, a stitched video of the target vehicle in the embodiments of this application may be from videos shot by a plurality of devices. Compared with an actual video shot by the event data recorder, the stitched video obtained in the embodiments of this application has a wider multi-source angle, may provide playback of a more vivid traveling video for a user of the target vehicle, and may be applied to scenarios such as road condition viewing, monitoring, tracing, and security protection.

The vehicle in the embodiments of this application may be a car, a truck, a motorcycle, a bus, a ship, an airplane, a helicopter, a lawn mower, an entertainment car, a playground vehicle, a construction device, a tram, a golf cart, a train, a handcart, or the like. This is not specially limited in the embodiments of this application.

The target vehicle described in the embodiments of this application may be a specific vehicle, or may be vehicles of one category (for example, a vehicle model-related category such as bus, car, or transport vehicle, or a color-related category such as black vehicle, white vehicle, or red vehicle), or may be vehicles of a plurality of categories, or the like. For example, when the target vehicle is a bus, a stitched video including all buses may be generated. The target vehicle is not specifically limited in the embodiments of this application.

A source video described in the embodiments of this application may be a video shot by a photographing device (for example, the vehicle, a vehicle around the vehicle, a road device, or another vehicle photographing device). The source video may include a video frame, time information about shooting the video frame, positioning information of a vehicle in the video frame, an identifier of the vehicle, and the like.

For example, the time information about shooting the video frame may be low-precision time marked by a device shooting the video frame, or may be time determined according to a network time protocol (network time protocol, NTP). This is not specifically limited in the embodiments of this application. In a possible implementation, the time information may be set in the video frame in a form of a timestamp.

For example, the positioning information of the vehicle in the video frame may be global positioning system (global positioning system, GPS) information of the vehicle, or the like. This is not specifically limited in the embodiments of this application. For ease of description, an example in which GPS is used as positioning information is used for description in the following embodiments. This example is not used to limit the embodiments of this application.

In a possible implementation, the positioning information of the target vehicle is location information determined with assistance of a traveling speed of the target vehicle and an included angle of a steering wheel of the target vehicle.

In the embodiments of this application, when the target vehicle is at a steering angle or a vehicle speed is relatively low, the traveling speed of the target vehicle and the included angle of the steering wheel of the target vehicle may be obtained based on devices such as a gyroscope and the steering wheel, to assist in determining relatively accurate location information of the target vehicle.

In a possible implementation, the positioning information of the target vehicle is location information obtained by performing deviation compensation based on a shooting angle of view of the video frame.

In the embodiments of this application, a difference between shooting angles of view of cameras may cause deviation of the positioning information, and relatively accurate location information may be obtained by performing deviation compensation based on the shooting angle of view of the video frame. For example, for a fixed camera, a GPS range corresponding to an angle-of-view range of the fixed camera may be obtained in an existing video preprocessing manner. When a video is processed, matching is performed by using values in the GPS range, and calculation starts to be performed based on a speed and a direction of a vehicle at a moment at which the vehicle enters an angle of view, so that relatively specific coordinates can be calculated. For a mobile camera, the camera has GPS information, and location information may be calculated based on a GPS distance difference between two vehicles.

For example, the identifier of the vehicle may include one or more of the following: a license plate number of the vehicle, a color of the vehicle, a color feature of the vehicle, owner information of the vehicle, a shape of the vehicle, or information that can identify the vehicle. This is not specifically limited in the embodiments of this application.

A phase of obtaining the source video in the embodiments of this application may be understood as a data preparation phase or a video data uploading phase.

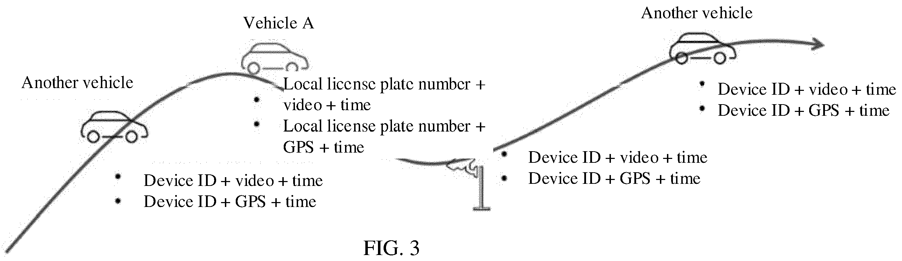

For example, as shown in FIG. 3, during video data uploading, when uploading a source video, a vehicle A, another vehicle around the vehicle, or the like may upload a device identifier (identify, ID) and two groups of data. One group of data includes "video and time", the other group of data includes "GPS and time", and the video may be associated with the GPS by using time. In the embodiments of this application, there may be no high precision requirement on time. For example, a time measurement deviation between different devices may be less than 5s to 10s. In this way, a requirement on performance of a device may be reduced, so that it is possible to obtain abundant source videos.

In a possible implementation, the two groups of data in FIG. 3 may alternatively be one group of data and be uploaded at the same time. For example, one group of data including "device identifier, video, GPS, and time" may be uploaded. A manner of uploading the source video is not specifically limited in the embodiments of this application.

A video composition request described in the embodiments of this application may also be referred to as a user request, a request message, request information, or the like. The video composition request is used to request to compose related videos of a target vehicle. For example, the video composition request includes one or more of an identifier, trajectory information, or time information of the target vehicle.

In the embodiments of this application, the identifier of the target vehicle that is included in the video composition request is used to indicate to compose videos that include the identifier of the target vehicle. The trajectory information included in the video composition request is used to indicate to compose videos of the target vehicle along a trajectory corresponding to the trajectory information. The time information in the video composition request is used to indicate to compose videos of the target vehicle within the time information.

In a possible implementation, the video composition request may include one of the trajectory information or the time information. This is not specifically limited in the embodiments of this application.

In a possible implementation, when receiving the video composition request, a device configured to perform video composition may further perform permission verification on the video composition request, for example, verify whether the video composition request is sent by the owner of the target vehicle or whether the video composition request is sent by a valid user. If verification on the video composition request succeeds, a subsequent video composition step may be performed. If verification on the video composition request fails, a subsequent video composition step may be rejected. This is not specifically limited in the embodiments of this application.

In a possible implementation, before composing videos, the device configured to perform video composition may further process source videos, to narrow a video range.

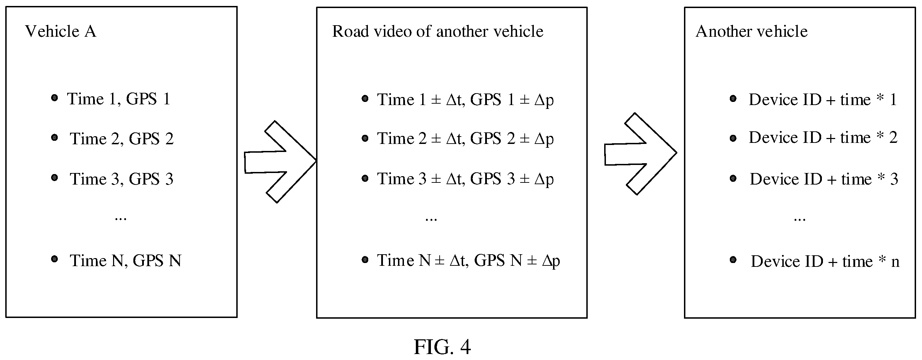

For example, as shown in FIG. 4, if the video composition request is used to request a composed video of the vehicle A, a trajectory of the vehicle A within a specific time period (for example, time 1 and GPS 1; time 2 and GPS 2 in FIG. 4) may be obtained based on identifier information (for example, a license plate number) of the vehicle A. Based on the trajectory of the vehicle A, a time offset Δt (time difference) may be added to time t of the vehicle A, and a location offset Δp (location difference) may be added to GPS information p of the vehicle A. A video recorded by another vehicle or device in p ± Δp within time t ± Δt is calculated and used as a video for subsequent stitching.

In a possible implementation, to improve precision, ±Δt and ±Δp may be associated with a vehicle speed. For example, both ±Δt and ±Δp are inversely proportional to the speed. For example, Δt = coefficient k1/speed v, and Δp = coefficient k2/speed v. Both k1 and k2 may be set according to an actual application scenario, and k1 or k2 is not specifically limited in the embodiments of this application.

A video segment described in the embodiments of this application may also be referred to as a valid segment or the like. The video segment may be obtained by processing a source video (or the foregoing source video obtained through screening). For example, the source video may be sliced, and filtering is performed on videos obtained after slicing, to extract a segment that includes the target vehicle or is related to the target vehicle, so as to obtain a plurality of video segments.

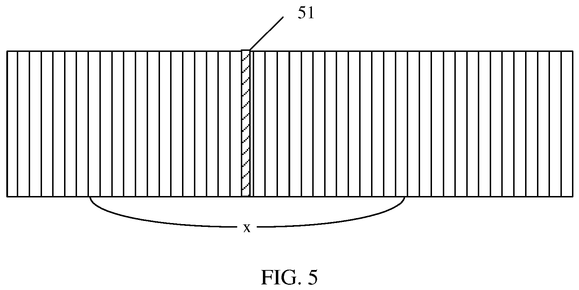

For example, as shown in FIG. 5, the target vehicle may be recognized from the source video through slicing, and a video with a total of x seconds before and after time 51 at which the target vehicle is recognized is extracted as a video segment. Herein, x is a positive number, and a value of x may be set according to an actual application scenario. This is not specifically limited in the embodiments of this application. In a possible implementation, the plurality of video segments may have different duration. This is not specifically limited in the embodiments of this application.

In a possible implementation, source videos may include videos that include the target vehicle and that are shot by different devices within a same time period. In this case, extracted video segments may be repeated. For example, when shooting time overlapping of a plurality of video segments is greater than a third threshold (this threshold may be set according to an actual application scenario, and this is not specifically limited in the embodiments of this application), it may be considered that the plurality of video segments are repeated. In this case, a video segment with relatively good video quality may be selected from the plurality of video segments as a video segment for subsequent stitching.

For example, quality rating may be performed on the video segments whose shooting time overlapping is greater than the third threshold (which may be set according to an actual application scenario). A video segment with a higher or highest quality score is selected, based on the quality rating, from the video segments whose shooting time overlapping is greater than the third threshold.

In a possible implementation, performing quality rating on the video segments whose shooting time overlapping is greater than the third threshold includes: performing, based on proportions and center degrees of the target vehicle in the video segments whose shooting time overlapping is greater than the third threshold, quality rating on the video segments whose shooting time overlapping is greater than the third threshold, where the proportion of the target vehicle is a ratio of a size of the target vehicle to a size of a video frame. For example, when the proportion of the target vehicle in the video frame is larger, or the target vehicle is closer to a center of the video frame, it may be considered that a quality score of the video frame is higher.

In a possible implementation, a video segment may be rated based on a quality status (for example, definition) of a video frame, or time, an angle, or the like at which a vehicle appears in a video frame. This is not specifically limited in the embodiments of this application.

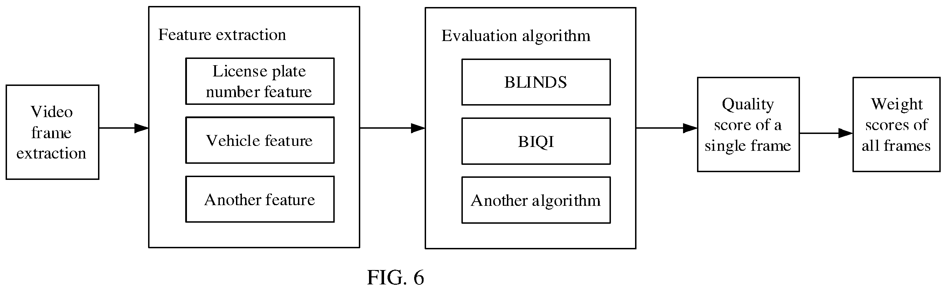

For example, FIG. 6 is a schematic diagram of video segment rating. As shown in FIG. 6, after a video frame in a video segment is extracted, a vehicle-related feature (for example, a license plate number feature, a vehicle feature, or another feature) in the video frame may be extracted, and then a quality score of the single frame is obtained with reference to an evaluation algorithm (for example, BLINDS, BIQI, or another algorithm). Subsequently, scores of all video frames in the video segment are weighted, to obtain a quality score of the video segment.

In the embodiments of this application, when a plurality of video segments are stitched, a manner in a combination of low-precision stitching and high-precision boundary stitching may be used to achieve a good stitching effect.

In a possible implementation, implementation of low-precision stitching is: sorting the plurality of video segments based on shooting time of the video segments. For example, the plurality of video segments may be set in a queue in sequence of time information. In a possible implementation, if the plurality of video segments overlap (for example, in the foregoing description, when whether two video segments overlap is determined, whether an overlapping ratio reaches the third threshold is determined, where the third threshold may be set according to an actual situation, for example, may be set to any value between 0.5 and 1; and if the overlapping ratio does not reach the third threshold, the two video segments are not considered to be overlapping videos, but in an actual situation, the two video segments may partially overlap), an overlapping part may be truncated. During truncation, a boundary video in the overlapping part may be reserved, to facilitate subsequent high-precision boundary stitching.

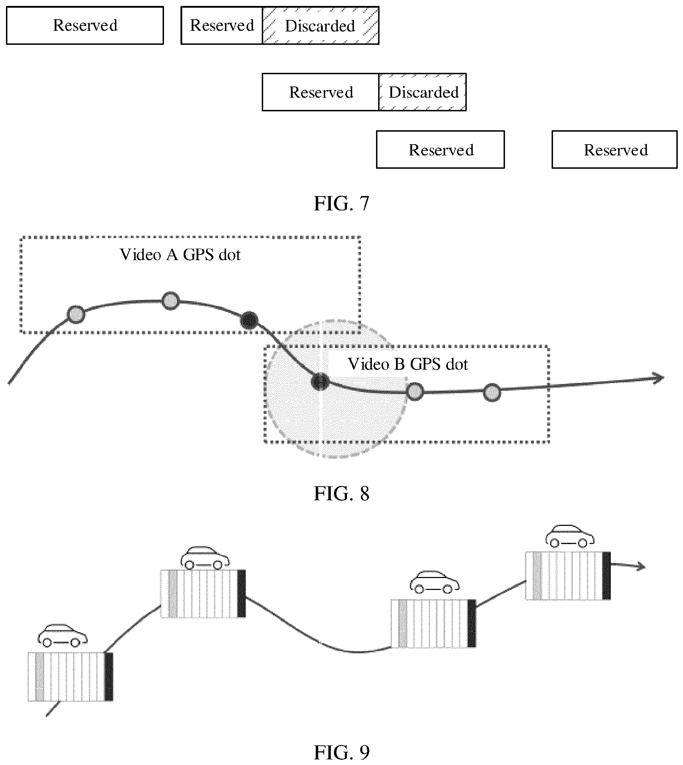

For example, FIG. 7 is a schematic diagram of low-precision stitching. Video segments may be stitched based on a time sequence. For video segments that overlap, a video segment with a higher video score may be further selected and reserved, and a video segment with a lower video score is truncated based on a stitching boundary. During truncation, a repeated boundary video may be reserved, to facilitate subsequent high-precision boundary stitching.

In a possible implementation, implementation of high-precision boundary stitching is: implementing high-precision stitching at a boundary of a video frame based on positioning information of the target vehicle in the video frame.

For example, a plurality of video segments are sorted in sequence of time. For a first video frame segment and a second video frame segment that are adjacent in time in the plurality of video segments, a multi-frame video at an end location of the first video segment may be selected as a first boundary video, and a multi-frame video at a start location of the second video segment may be selected as a second boundary video. Then, a location of the target vehicle in the second boundary video is predicted based on location information of the target vehicle in the first boundary video, a video frame corresponding to the location is used as a stitching video frame, and the first video segment and the second video segment are stitched by using the stitching video frame.

In a possible implementation, when the location of the target vehicle in the second boundary video is predicted based on the location information of the target vehicle in the first boundary video, first location information may be predicted based on positioning information of the target vehicle in a plurality of video frames in the first boundary video, and a video frame closest to the first location information is selected from the second boundary video.

For example, FIG. 8 is a schematic diagram of first location information prediction according to an embodiment of this application. As shown in FIG. 8, at least three video frames may be determined in the first boundary video (each circle in FIG. 8 may represent one video frame), and the at least three video frames include the last video frame (for example, a circle filled with black in a video A in FIG. 8) of the first boundary video. Speed information and direction information of the target vehicle are calculated based on shooting time of the at least three video frames and positioning information of the target vehicle in the at least three video frames (for example, the speed information of the vehicle may be calculated based on a distance and time, and the direction information of the vehicle may be obtained based on a location change). The speed information and the direction information may be used to predict the first location information. For example, the first location information is obtained by adding a first value to positioning information of the target vehicle in the last video frame of the first boundary video in a direction indicated by the direction information, and the first value is negatively correlated with the speed information (the first value may alternatively be determined with assistance of a high-precision map, for example, the first value may be determined with assistance of a condition of a road or the like in the map). Further, the video frame (for example, a circle filled with black in a video B in FIG. 8) closest to the first location information may be selected from the second boundary video as the stitching video frame.

In a possible implementation, after the stitching video frame is obtained, the second boundary video may be stitched to the first boundary video in the stitching video frame (or several frames adjacent to the stitching video frame). Because a location of the vehicle generally does not change suddenly, a relatively accurate stitching location may be obtained by predicting the stitching video frame based on the positioning information, so that a good stitching effect is achieved based on the relatively accurate stitching location.

In the embodiments of this application, the at least three video frames may be several consecutive video frames, or may be several inconsecutive video frames extracted from the video segment. For example, a distance between location information that is of the vehicle and that corresponds to two selected video frames may be greater than 30 cm, for example, kept between 50 cm and 5 m. The distance may be dynamically adjusted based on a speed of the vehicle. In this way, accurate direction information and location information can be obtained based on the three video frames.

In a possible implementation, when a shooting time interval between adjacent video segments in the plurality of video segments is greater than a fourth threshold (which may be set according to an actual situation), a preset video may be inserted between the adjacent video segments. The preset video may be, for example, a video recorded by an event data recorder of the vehicle, a landscape video, a map video, a road video, or any other possible video. In this way, a relatively smooth stitched video can be obtained.

In the embodiments of this application, after video stitching is completed, a trajectory video of the target vehicle may be obtained. For example, as shown in FIG. 9, a video trajectory of the target vehicle may be formed from videos on a map based on GPS information of video segments.

By using specific embodiments, the following describes in detail the technical solutions of this application and how to resolve the foregoing technical problem by using the technical solutions of this application. The following several specific embodiments may be implemented independently, or may be combined with each other. For a same or similar concept or process, details may not be described again in some embodiments.

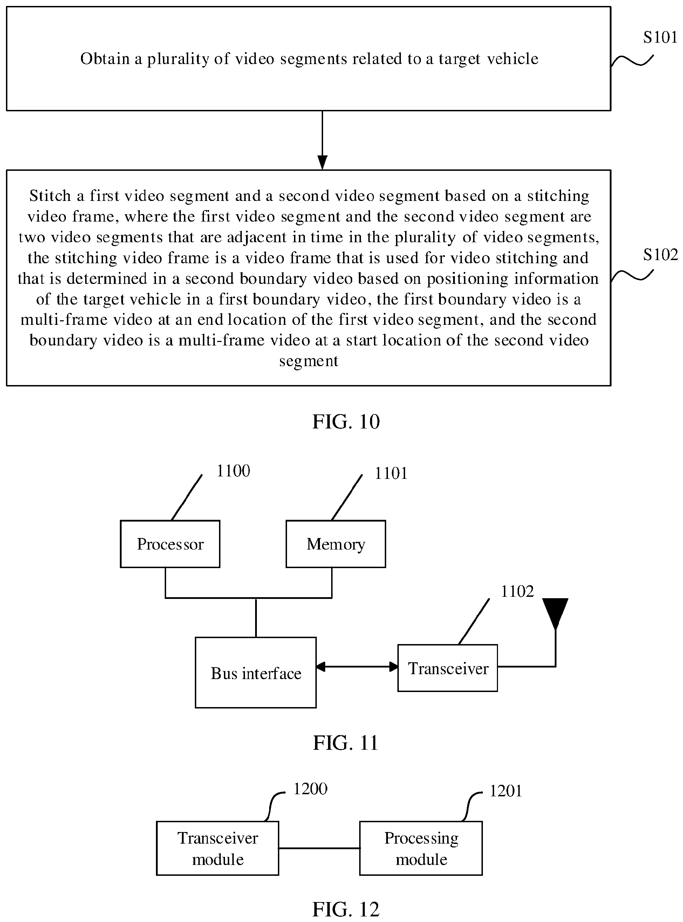

FIG. 10 is a schematic flowchart of a video stitching method according to an embodiment of this application. As shown in FIG. 10, the method includes the following steps.

S101: Obtain a plurality of video segments related to a target vehicle.

S102: Stitch a first video segment and a second video segment based on a stitching video frame, where the first video segment and the second video segment are two video segments that are adjacent in time in the plurality of video segments, the stitching video frame is a video frame that is used for video stitching and that is determined in a second boundary video based on positioning information of the target vehicle in a first boundary video, the first boundary video is a multi-frame video at an end location of the first video segment, and the second boundary video is a multi-frame video at a start location of the second video segment.

In this embodiment of this application, for specific implementation of S101 and S102, refer to the descriptions in the foregoing embodiments. Details are not described herein again. In the embodiments of this application, when a plurality of video segments are stitched, high-precision stitching may be performed on boundary videos in the video segments based on location information of a target vehicle in a video object, to improve video stitching accuracy, so that a good video stitching effect can be achieved.

From the foregoing descriptions of the solutions of this application, it may be understood that, to implement the foregoing functions, each device includes a corresponding hardware structure and/or software unit for performing each function. A person skilled in the art should easily be aware that, in combination with units and algorithm steps of the examples described in the embodiments disclosed in this specification, this application may be implemented by hardware or a combination of hardware and computer software. Whether a function is performed by hardware or hardware driven by computer software depends on particular applications and design constraint conditions of the technical solutions. A person skilled in the art may use different methods to implement the described functions for each particular application, but it should not be considered that the implementation goes beyond the scope of this application.

As shown in FIG. 11, an embodiment of this application provides a video stitching apparatus. The video stitching apparatus includes a processor 1100, a memory 1101, and a transceiver 1102.

The processor 1100 is responsible for managing a bus architecture and common processing, and the memory 1101 may store data used when the processor 1100 performs an operation. The transceiver 1102 is configured to receive and send data under control of the processor 1100, and perform data communication with the memory 1101.

The bus architecture may include any quantity of interconnected buses and bridges. Specifically, various circuits of one or more processors represented by the processor 1100 and various circuits of memories represented by the memory 1101 are linked together. The bus architecture may further connect various other circuits such as a peripheral device, a voltage stabilizer, and a power management circuit. These are well known in the art, and therefore are not further described in this specification. The bus interface provides an interface. The processor 1100 is responsible for managing the bus architecture and common processing, and the memory 1101 may store data used when the processor 1100 performs an operation.

A procedure disclosed in the embodiments of this application may be applied to the processor 1100, or implemented by the processor 1100. In an implementation process, steps of a video stitching procedure may be completed by using an integrated logic circuit of hardware in the processor 1100 or an instruction in a form of software. The processor 1100 may be a general-purpose processor, a digital signal processor, an application-specific integrated circuit, a field programmable gate array or another programmable logic device, a discrete gate or transistor logic device, or a discrete hardware component. The processor 1100 may implement or perform the methods, steps, and logical block diagrams disclosed in the embodiments of this application. The general-purpose processor may be a microprocessor, any conventional processor, or the like. The steps of the methods disclosed with reference to the embodiments of this application may be directly performed by a hardware processor, or may be performed by a combination of hardware and software modules in the processor. A software module may be located in a mature storage medium in the art, for example, a random access memory, a flash memory, a read-only memory, a programmable read-only memory, an electrically erasable programmable memory, or a register. The storage medium is located in the memory 1101. The processor 1100 reads information in the memory 1101 and completes the steps of the signal processing procedure in combination with hardware of the processor 1100.

In an optional manner of this application, the processor 1100 is configured to read a program in the memory 1101, to perform the method procedure in S101 and S102 shown in FIG. 10.

As shown in FIG. 12, this application provides a video stitching apparatus, and the apparatus includes a transceiver module 1200 and a processing module 1201.

The transceiver module 1200 is configured to obtain a plurality of video segments related to a target vehicle.

The processing module 1201 is configured to stitch a first video segment and a second video segment based on a stitching video frame, where the first video segment and the second video segment are two video segments that are adjacent in time in the plurality of video segments, the stitching video frame is a video frame that is used for video stitching and that is determined in a second boundary video based on positioning information of the target vehicle in a first boundary video, the first boundary video is a multi-frame video at an end location of the first video segment, and the second boundary video is a multi-frame video at a start location of the second video segment. In this embodiment of this application, when a plurality of video segments are stitched, high-precision stitching may be performed on boundary videos in the video segments based on location information of a target vehicle in a video object, to improve video stitching accuracy, so that a good video stitching effect can be achieved.

In a possible implementation, the video segment includes shooting time of a video frame in the video segment and positioning information of the target vehicle in the video frame; and the stitching video frame is specifically a video frame that is selected from the second boundary video and that is closest to first location information, where the first location information is predicted based on positioning information of the target vehicle in a plurality of video frames in the first boundary video. In this way, the video frame closest to a predicted location of the target vehicle can be selected from the second boundary video as the stitching video frame. A location of the target vehicle generally does not change suddenly. Therefore, in this embodiment of this application, a relatively accurate stitching video frame can be obtained by selecting the video frame closest to the predicted location of the target vehicle as the stitching video frame, so that a good stitching effect can be achieved.

In a possible implementation, the processing module is specifically configured to: determine at least three video frames in the first boundary video, where the at least three video frames include the last video frame of the first boundary video; and calculate speed information and direction information of the target vehicle based on shooting time of the at least three video frames and positioning information of the target vehicle in the at least three video frames, where the speed information and the direction information are used to predict the first location information. In this way, the first location information of a relatively accurate target location can be obtained through prediction based on a speed and a direction of the target vehicle, so that an accurate stitching video frame can be subsequently selected from the second boundary video.

In a possible implementation, the first location information is obtained by adding a first value to positioning information of the target vehicle in the last video frame of the first boundary video in a direction indicated by the direction information, and the first value is negatively correlated with the speed information. A higher speed of the target vehicle indicates a larger location change within a period of time. When a location of the target vehicle is predicted, if the first value is relatively large, prediction inaccuracy tends to occur. Therefore, the first location information of a relatively accurate target location can be obtained by setting the first value to be negatively correlated with the speed information, so that an accurate stitching video frame can be subsequently selected from the second boundary video.

In a possible implementation, the positioning information of the target vehicle includes location information determined with assistance of a traveling speed of the target vehicle and an included angle of a steering wheel of the target vehicle. In this way, relatively accurate location information of the target vehicle can be determined with assistance of the included angle of the steering wheel.

In a possible implementation, the positioning information of the target vehicle includes location information obtained by performing deviation compensation based on a shooting angle of view of the video frame. In this way, relatively accurate location information can be obtained by performing deviation compensation based on the shooting angle of view of the video frame.

In a possible implementation, the transceiver module is specifically configured to: receive a video composition request, where the video composition request includes an identifier, trajectory information, and time information of the target vehicle; obtain source videos that are related to the trajectory information and the time information and that include the target vehicle; and determine the plurality of video segments related to the target vehicle in the source videos. In this way, a related video of the target vehicle can be composed based on a request of a user, so that a requirement of the user is better satisfied.

In a possible implementation, the transceiver module is specifically configured to obtain the source videos whose location differences from the trajectory information are within a first threshold range, whose time differences from the time information are within a second threshold range, and that include the target vehicle. In this way, relatively valid source video data for the target vehicle can be obtained, so as to avoid waste of a subsequent computing resource that is caused by a useless video in the source video data.

In a possible implementation, the first threshold range is negatively correlated with a speed of the target vehicle, and/or the second threshold range is negatively correlated with the speed of the target vehicle.

In a possible implementation, the source videos include a video shot by another vehicle and/or a video shot by a road device. In this way, videos of the target vehicle at a plurality of angles can be obtained, so that relatively abundant stitching materials can be obtained.

In a possible implementation, the processing module is further configured to: perform filtering on the source videos, to obtain a plurality of first video segments including the target vehicle; when there are video segments whose shooting time overlapping ratios are greater than a third threshold in the plurality of first video segments, perform quality rating on the video segments whose shooting time overlapping ratios are greater than the third threshold; and select, based on the quality rating, one video segment from the video segments whose shooting time overlapping ratios are greater than the third threshold. In this way, a video segment with relatively good quality can be used as a video segment for stitching, to obtain a stitched video with relatively good quality.

In a possible implementation, the processing module is specifically configured to perform, based on proportions and center degrees of the target vehicle in the video segments whose shooting time overlapping is greater than the third threshold, quality rating on the video segments whose shooting time overlapping is greater than the third threshold, where the proportion of the target vehicle is a ratio of a size of the target vehicle to a size of a video frame.

In a possible implementation, the plurality of video segments are video segments sorted based on shooting time of the plurality of video segments; and when a shooting time interval between adjacent video segments in the plurality of video segments is greater than a fourth threshold, a preset video is inserted between the adjacent video segments. In this way, when two video segments with a relatively large time interval are stitched, the preset video may be inserted, to avoid an excessively large location jump during scene switching after stitching, and improve smoothness of a stitched video.

In a possible implementation, functions of the transceiver module 1200 and the processing module 1201 shown in FIG. 12 may be performed by the processor 1100 by running the program in the memory 1101, or may be performed by the processor 1100 independently.

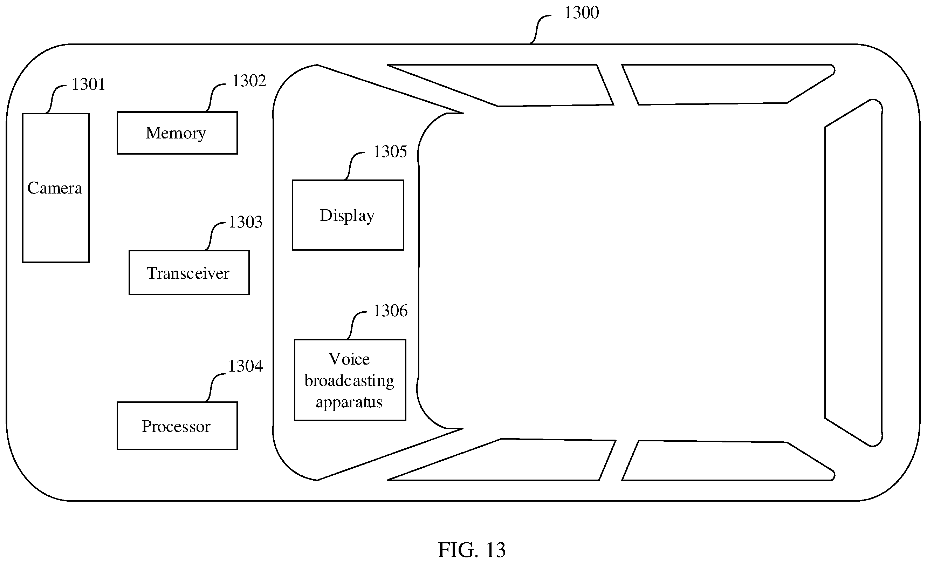

As shown in FIG. 13, this application provides a vehicle, and the vehicle includes at least one camera 1301, at least one memory 1302, at least one transceiver 1303, and at least one processor 1304.

The camera 1301 is configured to obtain a video segment.

The memory 1302 is configured to store one or more programs and data information, where the one or more programs include instructions.

The transceiver 1303 is configured to perform data transmission with a communications device in the vehicle, and is configured to perform data transmission with a cloud, to obtain a plurality of video segments related to a target vehicle.

The processor 1304 is configured to stitch a first video segment and a second video segment based on a stitching video frame, where the first video segment and the second video segment are two video segments that are adjacent in time in the plurality of video segments, the stitching video frame is a video frame that is used for video stitching and that is determined in a second boundary video based on positioning information of the target vehicle in a first boundary video, the first boundary video is a multi-frame video at an end location of the first video segment, and the second boundary video is a multi-frame video at a start location of the second video segment.

In an implementation, the vehicle further includes a display 1305 and a voice broadcasting apparatus 1306.

The display 1305 is configured to display a stitched video.

The voice broadcasting apparatus 1306 is configured to broadcast audio of the stitched video.

In some possible implementations, aspects of the video stitching method provided in the embodiments of this application may further be implemented in a form of a program product. The program product includes program code. When the program code is run on a computer device, the program code is used to enable the computer device to perform the steps in the video stitching method described in this specification according to various example implementations of this application.

The program product may be any combination of one or more readable media. The readable medium may be a readable signal medium or a readable storage medium. For example, the readable storage medium may be, but is not limited to, an electrical, magnetic, optical, electromagnetic, infrared, or semiconductor system, apparatus or device, or any combination thereof. More specific examples (non-exhaustive list) of the readable storage medium include: an electrical connection having one or more conducting wires, a portable disk, a hard disk, a random access memory (RAM), a read-only memory (ROM), an erasable programmable read-only memory (EPROM or flash memory), an optical fiber, a portable compact disc read-only memory (CD-ROM), an optical storage component, a magnetic storage component, or any appropriate combination thereof.

The program product used for video stitching according to implementations of this application may use a portable compact disc read-only memory (CD-ROM) and include program code, and may run on a server device. However, the program product in this application is not limited thereto. In this document, the readable storage medium may be any tangible medium that includes or stores a program, and the program may be used by or in combination with a communication transmission apparatus or component.

The readable signal medium may include a data signal propagated in a baseband or as a part of a carrier, where the data signal carries readable program code. The propagated data signal may be in a plurality of forms, including but not limited to an electromagnetic signal, an optical signal, or any appropriate combination thereof. The readable signal medium may alternatively be any readable medium other than the readable storage medium. The readable medium may send, propagate, or transmit a program used by or in combination with a periodic network action system, apparatus, or device.

The program code included in the readable medium may be transmitted by using any appropriate medium, including but not limited to a wireless medium, a wired medium, an optical cable, an RF medium, or any appropriate combination thereof.

The program code used to execute the operations of this application may be written in any combination of one or more program design languages. The program design languages include object-oriented program design languages such as Java and C++, and further include a conventional procedural program design language such as a "C" language or a similar program design language. The program code may be completely executed on a user's computing device, partially executed on user equipment, executed as an independent software package, partially executed on a user's computing device and partially executed on a remote computing device, or completely executed on a remote computing device or server. When the program code is executed on the remote computing device, the remote computing device may be connected to the user's computing device by using any type of network, including a local area network (LAN) or a wide area network (WAN), or may be connected to an external computing device.

An embodiment of this application further provides a computing device readable storage medium for a video stitching method, that is, content is not lost after a power failure. The storage medium stores a software program, including program code. When the program code is run on a computing device, the software program may implement any one of the foregoing video stitching solutions in the embodiments of this application when being read and executed by one or more processors.

An embodiment of this application further provides an electronic device. When each functional module is obtained through division by using each corresponding function, the electronic device includes a processing module, configured to support a video stitching apparatus in performing the steps in the foregoing embodiments, for example, performing operations in S101 and S102, or another process of the technology described in the embodiments of this application.

All related content of the steps in the foregoing method embodiments may be cited in function descriptions of corresponding functional modules. Details are not described herein again.

Certainly, the video stitching apparatus includes but is not limited to the unit modules listed above. In addition, functions that the foregoing functional modules can specifically implement include but are not limited to the functions corresponding to the method steps in the foregoing examples. For detailed descriptions of another unit of the electronic device, refer to detailed descriptions of method steps corresponding to the unit, and details are not described herein again in this embodiment of this application.

When an integrated unit is used, the electronic device in the foregoing embodiments may include a processing module, a storage module, and a communications module. The storage module is configured to store program code and data of the electronic device. The communications module is configured to support communication between the electronic device and another network entity, to implement functions such as calling, data exchange, and Internet access of the electronic device.

The processing module is configured to control and manage an action of the electronic device. The processing module may be a processor or a controller. The communications module may be a transceiver, an RF circuit, a communications interface, or the like. The storage module may be a memory.

Further, the electronic device may further include an input module and a display module. The display module may be a screen or a display. The input module may be a touchscreen, a voice input apparatus, a fingerprint sensor, or the like.

The foregoing describes this application with reference to the block diagrams and/or flowcharts of the method, the device (system), and/or the computer program product in the embodiments of this application. It should be understood that a block of the block diagrams and/or flowcharts and a combination of blocks in the block diagrams and/or flowcharts, can be implemented by using computer program instructions. These computer program instructions may be provided to a processor of a general-purpose computer, a processor of a dedicated computer, or another programmable data processing apparatus to produce a machine, so that the instructions executed by the processor of the computer or the another programmable data processing apparatus create a method for implementing a specific function/action in the block in the flowcharts and/or block diagrams.

Correspondingly, this application may further be implemented by using hardware and/or software (including firmware, resident software, microcode, and the like). Still further, this application may be in a form of a computer program product on a computer-usable or computer-readable storage medium. The computer program product has computer-usable or computer-readable program code implemented in the medium, so that the computer-usable or computer-readable is used by an instruction execution system or used in combination with an instruction execution system. In the context of this application, the computer-usable or computer-readable medium may be any medium, and may include, store, communicate, transmit, or transfer a program, for use by an instruction execution system, apparatus, or device or used in combination with an instruction execution system, apparatus, or device.

A plurality of embodiments are described in detail with reference to a plurality of flowcharts in this application. However, it should be understood that related descriptions of these flowcharts and corresponding embodiments thereof are merely an example for ease of understanding, and should not constitute any limitation on this application. Each step in each flowchart is not necessarily to be performed. For example, some steps may be skipped. In addition, an execution sequence of the steps is not fixed, and is not limited to that shown in the figure. The execution sequence of the steps should be determined by using functions and internal logic of the steps.

A plurality of embodiments described in this application may be arbitrarily combined, or steps may intersect with each other for execution. An execution sequence of the embodiments or an execution sequence of the steps of the embodiments is not fixed, and is not limited to that shown in the figure. The execution sequence of the embodiments and a cross execution sequence of the steps of the embodiments should be determined by using functions and internal logic of the embodiments and the steps.

Although this application is described with reference to specific features and the embodiments thereof, it is clear that various modifications and combinations may be made to them without departing from the scope of this application. Correspondingly, the specification and accompanying drawings are merely example description of this application defined by the appended claims. It is clear that a person skilled in the art can make various modifications and variations to this application without departing from the scope of this application. This application is intended to cover these modifications and variations of this application provided that they fall within the scope of the claims of this application.

## Claims

1. A video stitching method, comprising:
obtaining a plurality of video segments related to a target vehicle (S101), wherein the obtaining a plurality of video segments (S101) related to a target vehicle (100) comprises:
receiving a video composition request, wherein the video composition request comprises an identifier, trajectory information, and time information of the target vehicle (100);
obtaining source videos that are related to the trajectory information and the time information and that comprise the target vehicle (100); and
determining the plurality of video segments related to the target vehicle (100) in the source videos, wherein the determining the plurality of video segments related to the target vehicle in the source videos comprises:
performing filtering on the source videos, to obtain a plurality of first video segments comprising the target vehicle (100);
when there are video segments whose shooting time overlapping ratios are greater than a third threshold in the plurality of first video segments, performing quality rating on the video segments whose shooting time overlapping ratios are greater than the third threshold; and
selecting, based on the quality rating, one video segment from the video segments whose shooting time overlapping ratios are greater than the third threshold, wherein the performing quality rating on the video segments whose shooting time overlapping ratios are greater than the third threshold comprises:
performing, based on proportions and center degrees of the target vehicle (100) in the video segments whose shooting time overlapping ratios are greater than the third threshold, quality rating on the video segments whose shooting time overlapping ratios are greater than the third threshold, wherein the proportion of the target vehicle (100) is a ratio of a size of the target vehicle (100) to a size of a video frame;
stitching the selected first video segment and a second video segment based on a stitching video frame; wherein
the first video segment and the second video segment are two video segments that are adjacent in time in the plurality of video segments, the stitching video frame is a video frame that is used for video stitching and that is determined in a second boundary video based on positioning information of the target vehicle (100) in a first boundary video, the first boundary video is a multi-frame video at an end location of the first video segment, and the second boundary video is a multi-frame video at a start location of the second video segment (S102).

2. The method according to claim 1, wherein the video segment comprises shooting time of a video frame in the video segment and positioning information of the target vehicle (100) in the video frame; and
the stitching video frame is specifically a video frame that is selected from the second boundary video and that is closest to first location information, wherein the first location information is predicted based on positioning information of the target vehicle (100) in a plurality of video frames in the first boundary video.

3. The method according to claim 2, wherein predicting the first location information based on the positioning information of the target vehicle (100) in the plurality of video frames in the first boundary video comprises:
determining at least three video frames in the first boundary video, wherein the at least three video frames comprise the last video frame of the first boundary video; and
calculating speed information and direction information of the target vehicle (100) based on shooting time of the at least three video frames and positioning information of the target vehicle (100) in the at least three video frames, wherein the speed information and the direction information are used to predict the first location information.

4. The method according to claim 3, wherein the first location information is obtained by adding a first value to positioning information of the target vehicle (100) in the last video frame of the first boundary video in a direction indicated by the direction information, and the first value is negatively correlated with the speed information.

5. The method according to any one of claims 1 to 4, wherein the positioning information of the target vehicle (100) comprises location information determined with assistance of a traveling speed of the target vehicle (100) and an included angle of a steering wheel of the target vehicle (100).

6. The method according to any one of claims 1 to 4, wherein the positioning information of the target vehicle (100) comprises location information obtained by performing deviation compensation based on a shooting angle of view of the video frame.

7. The method according to claim 1, wherein the obtaining source videos that are related to the trajectory information and the time information and that comprise the target vehicle (100) comprises:
obtaining the source videos whose location differences from the trajectory information are within a first threshold range, whose time differences from the time information are within a second threshold range, and that comprise the target vehicle.

8. The method according to claim 7, wherein the first threshold range is negatively correlated with a speed of the target vehicle (100), and/or the second threshold range is negatively correlated with the speed of the target vehicle (100).

9. The method according to claim 7 or 8, wherein the source videos comprise a video shot by another vehicle (100) and/or a video shot by a road device.

10. The method according to any one of claims 1 to 9, wherein the plurality of video segments are video segments sorted based on shooting time of the plurality of video segments; and
when a shooting time interval between adjacent video segments in the plurality of video segments is greater than a fourth threshold, a preset video is inserted between the adjacent video segments.

11. An apparatus, which is configured to perform the method according to any one of claims 1 to 10.

12. A readable computer storage product, wherein the readable computer storage product is configured to store a computer program, and the computer program, when executed by a computer, causes the computer to carry out the method according to any one of claims 1 to 10.

## Patentansprüche

1. Videozusammenführungsverfahren, umfassend:
Erlangen einer Vielzahl von Videosegmenten in Bezug auf ein Zielfahrzeug (S101), wobei das Erlangen einer Vielzahl von Videosegmenten (S101) in Bezug auf ein Zielfahrzeug (100) Folgendes umfasst:
Empfangen einer Videokompositionsanforderung, wobei die Videokompositionsanforderung einen Bezeichner, Trajektorieninformationen und Zeitinformationen des Zielfahrzeugs (100) umfasst;
Erlangen von Quellvideos, die mit den Trajektorieninformationen und den Zeitinformationen in Beziehung stehen und das Zielfahrzeug (100) umfassen; und
Bestimmen der Vielzahl von Videosegmenten, die sich auf das Zielfahrzeug (100) in den Quellvideos beziehen, wobei das Bestimmen der Vielzahl von Videosegmenten, die sich auf das Zielfahrzeug in den Quellvideos beziehen, Folgendes umfasst:
Durchführen von Filterung an den Quellvideos, um eine Vielzahl von ersten Videosegmenten zu erlangen, die das Zielfahrzeug (100) umfassen;
wenn in der Vielzahl von ersten Videosegmenten Videosegmente vorliegen, deren Drehzeit-Überlappungsverhältnisse größer als ein dritter Schwellenwert sind, Durchführen einer Qualitätsbewertung für die Videosegmente, deren Drehzeit-Überlappungsverhältnisse größer als der dritte Schwellenwert sind; und
Auswählen eines Videosegments aus den Videosegmenten, deren Drehzeit-Überlappungsverhältnisse größer als der dritte Schwellenwert sind, basierend auf der Qualitätsbewertung, wobei die Durchführung der Qualitätsbewertung an den Videosegmenten, deren Drehzeit-Überlappungsverhältnisse größer als der dritte Schwellenwert sind, Folgendes umfasst:
Durchführen einer Qualitätsbewertung für die Videosegmente, deren Aufnahmezeit-Überlappungsverhältnisse größer als der dritte Schwellenwert sind, basierend auf Anteilen und Mittengraden des Zielfahrzeugs (100) in den Videosegmenten, deren Aufnahmezeit-Überlappungsverhältnisse größer als der dritte Schwellenwert sind, wobei der Anteil des Zielfahrzeugs (100) ein Verhältnis einer Größe des Zielfahrzeugs (100) zu einer Größe eines Videobildes ist;
Zusammenführen des ausgewählten ersten Videosegments und eines zweiten Videosegments basierend auf einem Zusammenführungsvideobild; wobei
das erste Videosegment und das zweite Videosegment zwei Videosegmente sind, die in der Vielzahl von Videosegmenten zeitlich benachbart sind, das Zusammenführungsvideobild ein Videobild ist, das zur Videozusammenführung verwendet wird und das in einem zweiten Begrenzungsvideo basierend auf Positionierungsinformationen des Zielfahrzeugs (100) in einem ersten Begrenzungsvideo bestimmt wird, das erste Begrenzungsvideo ein Mehrbild-Video an einer Endposition des ersten Videosegments ist und das zweite Begrenzungsvideo ein Mehrbild-Video an einer Startposition des zweiten Videosegments (S102) ist.

2. Verfahren nach Anspruch 1, wobei das Videosegment die Aufnahmezeit eines Videobildes in dem Videosegment und Positionierungsinformationen des Zielfahrzeugs (100) in dem Videobild umfasst; und
das Zusammenführungsvideobild speziell ein Videobild ist, das aus dem zweiten Begrenzungsvideo ausgewählt ist und das der ersten Standortinformationen am nächsten liegt, wobei die ersten Standortinformationen basierend auf Positionierungsinformationen des Zielfahrzeugs (100) in einer Vielzahl von Videobildern in dem ersten Begrenzungsvideo vorhergesagt werden.

3. Verfahren nach Anspruch 2, wobei das Vorhersagen der ersten Standortinformationen basierend auf den Positionierungsinformationen des Zielfahrzeugs (100) in der Vielzahl von Videobildern in dem ersten Begrenzungsvideo Folgendes umfasst:
Bestimmen von mindestens drei Videobildern in dem ersten Begrenzungsvideo, wobei die mindestens drei Videobilder das letzte Videobild des ersten Begrenzungsvideos umfassen; und
Berechnen von Geschwindigkeitsinformationen und Richtungsinformationen des Zielfahrzeugs (100) basierend auf der Aufnahmezeit der mindestens drei Videobilder und Positionierungsinformationen des Zielfahrzeugs (100) in den mindestens drei Videobildern, wobei die Geschwindigkeitsinformationen und die Richtungsinformationen verwendet werden, um die ersten Standortinformationen vorherzusagen.

4. Verfahren nach Anspruch 3, wobei die ersten Standortinformationen durch Hinzufügen eines ersten Wertes zu den Positionierungsinformationen des Zielfahrzeugs (100) in dem letzten Videobild des ersten Begrenzungsvideos in einer durch die Richtungsinformationen angegebenen Richtung erlangt werden, und der erste Wert negativ mit den Geschwindigkeitsinformationen korreliert ist.

5. Verfahren nach einem der Ansprüche 1 bis 4, wobei die Positionierungsinformationen des Zielfahrzeugs (100) Standortinformationen umfassen, die mithilfe einer Fahrgeschwindigkeit des Zielfahrzeugs (100) und eines eingeschlossenen Winkels eines Lenkrads des Zielfahrzeugs (100) bestimmt werden.

6. Verfahren nach einem der Ansprüche 1 bis 4, wobei die Positionierungsinformationen des Zielfahrzeugs (100) Standortinformationen umfassen, die durch Durchführen einer Abweichungskompensation basierend auf einem Aufnahmewinkel des Videobildes erlangt werden.

7. Verfahren nach Anspruch 1, wobei das Erlangen von Quellvideos, die mit den Trajektorieninformationen und den Zeitinformationen in Beziehung stehen und das Zielfahrzeug (100) umfassen, Folgendes umfasst:
Erlangen der Quellvideos, deren Standortunterschiede von den Trajektorieninformationen innerhalb eines ersten Schwellenbereichs liegen, deren Abweichung von den Zeitinformationen innerhalb eines zweiten Schwellenbereichs liegt und die das Zielfahrzeug umfassen.

8. Verfahren nach Anspruch 7, wobei der erste Schwellenwertbereich negativ mit einer Geschwindigkeit des Zielfahrzeugs (100) korreliert ist und/oder der zweite Schwellenwertbereich negativ mit der Geschwindigkeit des Zielfahrzeugs (100) korreliert ist.

9. Verfahren nach Anspruch 7 oder 8, wobei die Quellvideos ein durch ein anderes Fahrzeug (100) aufgenommenes Video und/oder ein durch eine Vorrichtung für den Straßenverkehr aufgenommenes Video umfassen.

10. Verfahren nach einem der Ansprüche 1 bis 9, wobei die Vielzahl von Videosegmenten Videosegmente sind, die basierend auf der Aufnahmezeit der Vielzahl von Videosegmenten sortiert sind; und
wenn ein Aufnahmezeitintervall zwischen benachbarten Videosegmenten in der Vielzahl von Videosegmenten größer ist als ein vierter Schwellenwert, ein voreingestelltes Video zwischen den benachbarten Videosegmenten eingefügt wird.

11. Gerät, das dazu konfiguriert ist, das Verfahren nach einem der Ansprüche 1 bis 10 durchzuführen.

12. Lesbares Computerspeicherprodukt, wobei das lesbare Computerspeicherprodukt dazu konfiguriert ist, ein Computerprogramm zu speichern, und das Computerprogramm, wenn es durch einen Computer ausgeführt wird, den Computer veranlasst, das Verfahren nach einem der Ansprüche 1 bis 10 durchzuführen.

## Revendications

1. Procédé d'assemblage vidéo, comprenant :
l'obtention d'une pluralité de segments vidéo relatifs à un véhicule cible (S101), dans lequel l'obtention d'une pluralité de segments vidéo (S101) relatifs à un véhicule cible (100) comprend :
la réception d'une demande de composition vidéo, dans lequel la demande de composition vidéo comprend un identifiant, des informations de trajectoire et des informations temporelles du véhicule cible (100) ;
l'obtention de vidéos sources qui sont liées aux informations de trajectoire et aux informations temporelles et qui comprennent le véhicule cible (100) ; et
la détermination de la pluralité de segments vidéo liés au véhicule cible (100) dans les vidéos sources, dans lequel la détermination de la pluralité de segments vidéo liés au véhicule cible dans les vidéos sources comprend :
la réalisation d'un filtrage sur les vidéos sources, pour obtenir une pluralité de premiers segments vidéo comprenant le véhicule cible (100) ;
lorsqu'il existe des segments vidéo dont les rapports de chevauchement de temps de prise de vue sont supérieurs à un troisième seuil dans la pluralité de premiers segments vidéo, la réalisation d'une évaluation de qualité sur les segments vidéo dont les rapports de chevauchement de temps de prise de vue sont supérieurs au troisième seuil ; et
la sélection, sur la base de l'évaluation de qualité, d'un segment vidéo à partir des segments vidéo dont les rapports de chevauchement de temps de prise de vue sont supérieurs au troisième seuil, dans lequel la réalisation de l'évaluation de qualité sur les segments vidéo dont les rapports de chevauchement de temps de prise de vue sont supérieurs au troisième seuil comprend :
la réalisation, sur la base de proportions et de degrés centraux du véhicule cible (100) dans les segments vidéo dont les rapports de chevauchement de temps de prise de vue sont supérieurs au troisième seuil, d'une évaluation de la qualité sur les segments vidéo dont les rapports de chevauchement de temps de prise de vue sont supérieurs au troisième seuil, dans lequel la proportion du véhicule cible (100) est un rapport d'une taille du véhicule cible (100) à une taille d'une trame vidéo ;
l'assemblage du premier segment vidéo sélectionné et d'un second segment vidéo sur la base d'une trame vidéo d'assemblage ; dans lequel
le premier segment vidéo et le second segment vidéo sont deux segments vidéo qui sont adjacents dans le temps dans la pluralité de segments vidéo, la trame vidéo d'assemblage est une trame vidéo qui est utilisée pour l'assemblage vidéo et qui est déterminée dans une seconde vidéo limite sur la base d'informations de positionnement du véhicule cible (100) dans une première vidéo limite, la première vidéo limite est une vidéo multi-trames à un emplacement de fin du premier segment vidéo, et la seconde vidéo limite est une vidéo multi-trames à un emplacement de début du second segment vidéo (S102).

2. Procédé selon la revendication 1, dans lequel le segment vidéo comprend le temps de prise de vue d'une trame vidéo dans le segment vidéo et les informations de positionnement du véhicule cible (100) dans la trame vidéo ; et
la trame vidéo d'assemblage est spécifiquement une trame vidéo qui est sélectionnée à partir de la seconde vidéo limite et qui est la plus proche de premières informations d'emplacement, dans lequel les premières informations d'emplacement sont prédites sur la base des informations de positionnement du véhicule cible (100) dans une pluralité de trames vidéo dans la première vidéo limite.

3. Procédé selon la revendication 2, dans lequel la prédiction des premières informations d'emplacement sur la base des informations de positionnement du véhicule cible (100) dans la pluralité de trames vidéo dans la première vidéo limite comprend :
la détermination d'au moins trois trames vidéo dans la première vidéo limite, dans lequel les au moins trois trames vidéo comprennent la dernière trame vidéo de la première vidéo limite ; et
le calcul d'informations de vitesse et d'informations de direction du véhicule cible (100) sur la base du temps de prise de vue des au moins trois trames vidéo et des informations de positionnement du véhicule cible (100) dans les au moins trois trames vidéo, dans lequel les informations de vitesse et les informations de direction sont utilisées pour prédire les premières informations d'emplacement.

4. Procédé selon la revendication 3, dans lequel les premières informations d'emplacement sont obtenues en ajoutant une première valeur aux informations de positionnement du véhicule cible (100) dans la dernière trame vidéo de la première vidéo limite dans une direction indiquée par les informations de direction, et la première valeur est corrélée négativement aux informations de vitesse.

5. Procédé selon l'une quelconque des revendications 1 à 4, dans lequel les informations de positionnement du véhicule cible (100) comprennent des informations d'emplacement déterminées à l'aide d'une vitesse de déplacement du véhicule cible (100) et d'un angle inclus d'un volant du véhicule cible (100).

6. Procédé selon l'une quelconque des revendications 1 à 4, dans lequel les informations de positionnement du véhicule cible (100) comprennent des informations d'emplacement obtenues en réalisant une compensation d'écart sur la base d'un angle de vue de prise de vue de la trame vidéo.

7. Procédé selon la revendication 1, dans lequel l'obtention de vidéos sources qui sont liées aux informations de trajectoire et aux informations temporelles et qui comprennent le véhicule cible (100) comprend :
l'obtention des vidéos sources dont les différences d'emplacement par rapport aux informations de trajectoire sont dans une première plage de seuil, dont les différences de temps par rapport aux informations temporelles sont dans une seconde plage de seuil, et qui comprennent le véhicule cible.

8. Procédé selon la revendication 7, dans lequel la première plage de seuil est corrélée négativement à une vitesse du véhicule cible (100), et/ou la seconde plage de seuil est corrélée négativement à la vitesse du véhicule cible (100).

9. Procédé selon la revendication 7 ou 8, dans lequel les vidéos sources comprennent une vidéo prise par un autre véhicule (100) et/ou une vidéo tournée par un dispositif routier.

10. Procédé selon l'une quelconque des revendications 1 à 9, dans lequel la pluralité de segments vidéo sont des segments vidéo triés sur la base du temps de prise de vue de la pluralité de segments vidéo ; et
lorsqu'un intervalle de temps de prise de vue entre des segments vidéo adjacents dans la pluralité de segments vidéo est supérieur à un quatrième seuil, une vidéo prédéfinie est insérée entre les segments vidéo adjacents.

11. Appareil, configuré pour réaliser le procédé selon l'une quelconque des revendications 1 à 10.

12. Produit de stockage informatique lisible, dans lequel le produit de stockage informatique lisible est configuré pour stocker un programme informatique, et le programme informatique, lorsqu'il est exécuté par un ordinateur, amène l'ordinateur à mettre en œuvre le procédé selon l'une quelconque des revendications 1 à 10.
